# EUROPEAN PATENT APPLICATION

(11) **EP 4 221 103 A1**
(43) Date of publication of application: **02.08.2023**
(21) Application number: 21871539.9
(22) Date of filing: 23.09.2021
(51) Int. Cl.: H04L 12/46

(54) **PUBLIC CLOUD NETWORK CONFIGURATION METHOD, AND RELATED DEVICE**

(30) Priority: 25.09.2020 CN 202011029039
(71) Applicant: Huawei Cloud Computing Technologies Co., Ltd., Guizhou 550025 (CN)
(72) Inventor: GAO, Zhonghua, Shenzhen, Guangdong 518129 (CN); WANG, Rui, Shenzhen, Guangdong 518129 (CN)
(74) Representative: Körber, Martin Hans
(86) International application number: PCT/CN2021/119867
(87) International publication number: WO 2022/063170

(57) **Abstract**

This application provides a public cloud network configuration method and a related device. The method is applied to a cloud management platform, and includes: providing an input interface for a tenant, where the input interface is configured to receive a virtual machine network interface identifier input by the tenant, and the virtual machine network interface identifier identifies a network interface of a virtual machine for which a sub-interface needs to be configured; and determining the network interface of the virtual machine corresponding to the virtual machine network interface identifier, configuring the sub-interface for the network interface, and providing information about the sub-interface for the tenant. According to the foregoing method, the sub-interface can be configured for the network interface of the virtual machine, so that a container or the like in the virtual machine uses a cloud service on a public cloud through the configured sub-interface, and has a same network capability as the virtual machine.

## Description

### TECHNICAL FIELD

The present invention relates to the field of cloud computing technologies, and in particular, to a public cloud network configuration method and a related device.

### BACKGROUND

As an emerging industry in recent years, cloud computing has gained wide attention from scientific research and industrial fields. The cloud computing is emerging all over the world, and has become an important engine for promoting green development of an industry and a new business platform in the 21st century with its flexible, efficient, low-cost, and energy-saving operation mode. In a public cloud scenario, when a tenant deploys a virtual machine (virtual machine, VM) on a public cloud, an interface (interface) needs to be created for the virtual machine in a subnet (subnet) on a virtual private cloud (virtual private cloud, VPC) of the tenant, to communicate with another virtual machine on the VPC.

An existing public cloud technology supports containers in the virtual machine. Communication between the containers is supported by using the subnet internet protocol (Sub IP) of the interface. For each virtual machine interface, a Sub IP address in a same network segment as an interface IP address may be configured. For each Sub IP address, a logical interface is created in the virtual machine over an IP virtual local area network (virtual local area network, VLAN), and the logical interface is associated with a container network namespace. In this communication mode, it is difficult to use a network security group to implement container communication security, and communication policy configuration is complex. In addition, an IP VLAN module is needed to convert the Sub IP address into the logical interface, and a container address and a virtual machine interface address are in a same network segment. When container migration occurs, address modification may be caused. Moreover, network services such as an elastic load balance (elastic load balance, ELB) service and an elastic IP (elastic IP, EIP) service do not support a Sub IP model. Therefore, the containers deployed in the virtual machine do not support the network services such as the ELB service and the EIP service.

### SUMMARY

Embodiments of the present invention disclose a public cloud network configuration method and a related device, to configure a sub-interface for a network interface of a virtual machine, so that a container or the like in the virtual machine uses a cloud service on a public cloud through the configured sub-interface, and has a same network capability as the virtual machine.

According to a first aspect, this application provides a public cloud network configuration method. The method includes: providing an input interface for a tenant, where the input interface is configured to receive a virtual machine network interface identifier input by the tenant, and the virtual machine network interface identifier identifies a network interface of a virtual machine for which a sub-interface needs to be configured; and determining the network interface of the virtual machine corresponding to the virtual machine network interface identifier, configuring the sub-interface for the network interface, and providing information about the sub-interface for the tenant.

In the solution provided in this application, the network interface of the virtual machine is determined based on the virtual machine network interface identifier input by the tenant, the sub-interface is configured for the network interface, and then the information about the sub-interface is provided for the tenant, so that a container or the like in the virtual machine can use a cloud service on a public cloud through the configured sub-interface, and have a same network capability as the virtual machine.

With reference to the first aspect, in a possible implementation of the first aspect, the input interface is further configured to receive configuration information of the sub-interface that is input by the tenant, and a cloud management platform configures the sub-interface based on the configuration information.

In the solution provided in this application, the tenant inputs the configuration information of the sub-interface to enable the cloud management platform to configure the sub-interface, to ensure that the configured sub-interface has a same network capability as the virtual machine.

With reference to the first aspect, in a possible implementation of the first aspect, the sub-interface is bound to the container in the virtual machine, and the container performs network packet processing through the sub-interface.

In the solution provided in this application, the configured sub-interface is bound to the container in the virtual machine, so that containers can communicate with each other through the configured sub-interface. This completes network packet processing and simplifies a container communication process.

With reference to the first aspect, in a possible implementation of the first aspect, the configuration information of the sub-interface includes a security group rule, where the security group rule is used to perform security group processing on a packet of the container bound to the sub-interface.

In the solution provided in this application, a network security group may be used to implement container access security. This simplifies container access policy configuration.

With reference to the first aspect, in a possible implementation of the first aspect, the configuration information of the sub-interface includes subnet information of the sub-interface and a virtual local area network identifier VlanID of the sub-interface.

In the solution provided in this application, the sub-interface is configured by using the subnet information and the VlanID of the sub-interface, to ensure that the configured sub-interface has a same network capability as a main interface of the virtual machine.

With reference to the first aspect, in a possible implementation of the first aspect, a server in which the virtual machine corresponding to the virtual machine network interface identifier is located is determined; and a virtual machine manager of the server is notified to configure the sub-interface under the network interface of the virtual machine.

In the solution provided in this application, after receiving the virtual machine network interface identifier input by the tenant, a network configurator first determines the server in which the virtual machine corresponding to the virtual machine network interface identifier is located, and then notifies the virtual machine manager of the server to complete sub-interface configuration.

With reference to the first aspect, in a possible implementation of the first aspect, the information about the sub-interface includes one or any combination of a sub-interface identifier UUID of the sub-interface, a private network address and the subnet information of the sub-interface, a MAC address of the sub-interface, and the VlanID of the sub-interface.

With reference to the first aspect, in a possible implementation of the first aspect, the input interface includes a configuration interface, an application programming interface API, and an input template.

In the solution provided in this application, the tenant inputs the virtual machine network interface identifier and the configuration information of the sub-interface by using the configuration interface, the API, and the input template that are provided by the network configurator, to enable the network configurator to complete the sub-interface configuration, so that the configured sub-interface has a same network capability as the main interface of the virtual machine.

According to a second aspect, this application provides a network device, including: a receiving module, configured to receive a virtual machine network interface identifier input by a tenant, where the virtual machine network interface identifier identifies a network interface of a virtual machine for which a sub-interface needs to be configured; and a processing module, configured to determine the network interface of the virtual machine corresponding to the virtual machine network interface identifier, configure the sub-interface for the network interface, and provide information about the sub-interface for the tenant.

With reference to the second aspect, in a possible implementation of the second aspect, the receiving module is further configured to receive configuration information of the sub-interface that is input by the tenant; and the processing module is further configured to configure the sub-interface based on the configuration information.

With reference to the second aspect, in a possible implementation of the second aspect, the sub-interface is bound to a container in the virtual machine, and the container performs network packet processing through the sub-interface.

With reference to the second aspect, in a possible implementation of the second aspect, the configuration information of the sub-interface includes a security group rule, and the security group rule is used to perform security group processing on a packet of the container bound to the sub-interface.

With reference to the second aspect, in a possible implementation of the second aspect, the configuration information of the sub-interface includes subnet information of the sub-interface and a virtual local area network identifier VlanID of the sub-interface.

With reference to the second aspect, in a possible implementation of the second aspect, the processing module is specifically configured to: determine a server in which the virtual machine corresponding to the virtual machine network interface identifier is located; and notify a virtual machine manager of the server to configure the sub-interface under the network interface of the virtual machine.

With reference to the second aspect, in a possible implementation of the second aspect, the information about the sub-interface includes one or any combination of a sub-interface identifier UUID of the sub-interface, a private network address and the subnet information of the sub-interface, a media access control MAC address of the sub-interface, and the virtual local area network identifier VlanID of the sub-interface.

With reference to the second aspect, in a possible implementation of the second aspect, an input interface includes a configuration interface, an application programming interface API, and an input template.

According to a third aspect, this application provides a computing device. The computing device includes a processor and a memory, where the memory is configured to store program code, and the processor is configured to invoke the program code in the memory to perform the method in any one of the first aspect and the implementations with reference to the first aspect.

According to a fourth aspect, this application provides a computer-readable storage medium, where the computer-readable storage medium stores a computer program. When the computer program is executed by a processor, a procedure of the public cloud network configuration method provided in any one of the first aspect and the implementations with reference to the first aspect can be implemented.

According to a fifth aspect, this application provides a computer program product, where the computer program product includes instructions. When the instructions is executed by a computer, the computer is enabled to perform a procedure of the public cloud network configuration method provided in any one of the first aspect and the implementations with reference to the first aspect.

### BRIEF DESCRIPTION OF DRAWINGS

To describe technical solutions in embodiments of the present invention more clearly, the following briefly introduces accompanying drawings used in describing embodiments. It is clearly that the accompanying drawings in the following descriptions show some embodiments of the present invention, and a person of ordinary skill in the art may still derive other drawings from these accompanying drawings without creative efforts.
FIG. 1 is a schematic diagram of a scenario in which a container is deployed in a virtual machine according to an embodiment of this application;
FIG. 2 is a schematic diagram of another scenario in which a container is deployed in a virtual machine according to an embodiment of this application;
FIG. 3 is a schematic diagram of a structure of a system architecture according to an embodiment of this application;
FIG. 4 is a schematic flowchart of a public cloud network configuration method according to an embodiment of this application;
FIG. 5 is a schematic diagram of a configuration interface according to an embodiment of this application;
FIG. 6 is a schematic diagram of a scenario of configuring a sub-interface according to an embodiment of this application;
FIG. 7 is a schematic diagram of network packet processing according to an embodiment of this application;
FIG. 8 is a schematic diagram of security group configuration of a sub-interface according to an embodiment of this application;
FIG. 9 is a schematic diagram of a structure of a network device according to an embodiment of this application; and
FIG. 10 is a schematic diagram of a structure of a computing device according to an embodiment of this application.

### DESCRIPTION OF EMBODIMENTS

The following clearly and completely describes technical solutions in embodiments of this application with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

An "embodiment" mentioned in this specification means that a particular feature, structure, or characteristic described with reference to this embodiment may be included in at least one embodiment of this application. The phrase shown in various locations in the specification does not necessarily refer to a same embodiment, and is not an independent or optional embodiment exclusive from another embodiment. It is explicitly and implicitly understood by a person skilled in the art that embodiments described in the specification may be combined with another embodiment.

Some terms and related technologies in this application are first described with reference to the accompanying drawings, to help a person skilled in the art have a better understanding.

A virtual private cloud (virtual private cloud, VPC) is a dynamic configuration pool of public cloud computing resources and is used for data transmission between an enterprise and a cloud service provider by using an encryption protocol, a tunnel protocol, and another security program. The VPC builds an isolated virtual network environment that a user can configure and manage for an elastic cloud server, to improve security of cloud resources and simplify network deployment. Network features such as a security group, a virtual private network (virtual private network, VPN), an IP address segment, and bandwidth can be defined in the VPC. A tenant can easily manage and configure an internal network by using the VPC and securely and quickly change the network.

An internet protocol virtual local area network (IPVlan) can virtualize a plurality of virtual network sub-interfaces from a host interface, and each sub-interface has a same MAC address. When a dynamic host configuration protocol (dynamic host configuration protocol, DHCP) is used to allocate an IP address, a unique host identifier (client ID) field needs to be configured as a machine identifier. The IPVlan has two different working modes. Only one of the working modes can be selected for a parent interface (that is, the host interface), the modes cannot be mixed for use, and all virtual sub-interfaces that depend on the parent interface run in this mode.

A namespace is a powerful feature of a Linux kernel and greatly facilitates container virtualization. With this feature, each container can have its own namespace, and applications running in the namespace seem to be in an independent operating system environment. A naming mechanism ensures that containers do not affect each other. With the gradual improvement of a namespace function of the Linux system, processes are now allowed to run in isolated namespaces. Although these processes still share the same kernel and some running environments (for example, some system commands and system libraries), the processes are invisible to each other and think they are monopolizing the system.

A security group is a logical group providing access policies for elastic cloud servers that have same security protection requirements and are mutually trusted in a same VPC. After the security group is created, the tenant can define various access rules such as outbound and inbound rules for the security group. These rules control access from and to elastic cloud servers in the security group. These rules apply either to outbound or inbound network traffic. After being added to the security group, the elastic cloud servers are protected by these access rules.

An elastic network interface (elastic network interface, ENI) is a logical network component in the VPC and represents a virtual network interface card. The ENI is an elastic network interface bound to a cloud server on a private network and can be freely migrated among a plurality of cloud servers. A plurality of network interface cards may be bound to the cloud server to implement a high availability network, or a plurality of internal network IP addresses may be bound to an elastic network interface to implement deployment of a single host with the plurality of IP addresses.

A virtual machine (virtual machine, VM) is a complete computer system that is simulated by using software, has a complete hardware system function, and runs in an entirely isolated environment. All tasks that can be completed in a physical computer can be implemented in the VM. When the VM is created, a part of a hard disk and internal storage capacity of the physical computer need to be used as a hard disk and capacity of the VM. Each VM has an independent hard disk and operating system, and can be operated in a same way as a way that a physical machine is used.

A container (container) is a virtualization technology in a computer operating system. The technology enables a process to run in an independent and isolated environment (including an independent file system, namespace, resource view, or the like). This can simplify a software deployment process, enhance software portability and security, and improve system resource utilization. The container technology is widely used in a service-oriented scenario in a cloud computing field.

Network interface: a network interface, for example, eth0 and ethl. In an operating system, a network interface represents a network interface card.

Sub-interface: a sub-interface virtualized from a network interface, for example, eth0.1 or eth0.2, specifically a sub-network interface card virtualized from the network interface card. In an operating system, a sub-interface represents a sub-network interface card virtualized from a network interface card.

The foregoing network interface card may be a physical network interface card, or a virtual network interface card allocated to a virtual machine for use.

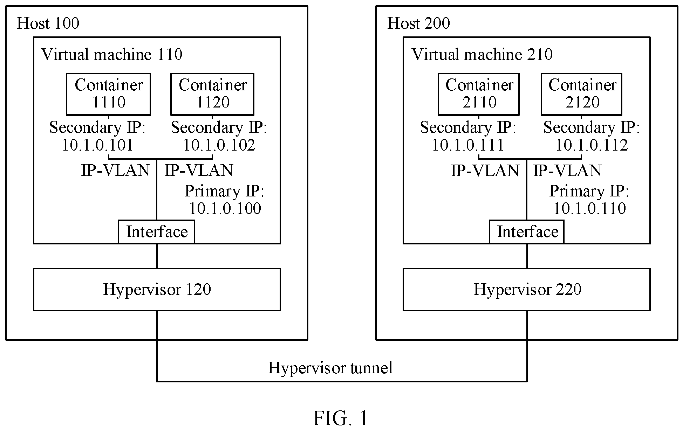

In a scenario in which a containerized application is deployed in a tenant virtual machine, a Sub IP of a virtual machine interface is needed to support a container. As shown in FIG. 1, a host 100 and a host 200 are connected by using a hypervisor (HyperVisor) tunnel. A virtual machine 110 and a hypervisor 120 run in the host 100, a container 1110 and a container 1120 are deployed in the virtual machine 110, and an interface IP address of the virtual machine 110 is 10.1.0.100. To support the container 1110 and the container 1120, Sub IP addresses in a same network segment as the interface IP address of the virtual machine 110 need to be configured. For example, an IP address corresponding to the container 1110 may be configured as 10.1.0.101, and an IP address corresponding to the container 1120 may be configured as 10.1.0.102. After the Sub IP addresses are configured, each Sub IP creates a logical interface in the virtual machine 110 in an IPVlan manner, and associates the created logical interface with a container namespace, so that each container corresponds to one logical interface. Similar to the host 100, the host 200 configures Sub IP addresses for a container 2110 and a container 2120 deployed in a virtual machine 210 and creates corresponding logical interfaces by using the foregoing same method. After the foregoing configuration is completed, the containers may normally communicate with each other. For example, the container 1110 in the virtual machine 110 may communicate with the container 2110 in the virtual machine 210.

It can be learned that, in the scenario in which the Sub IP is used to support the containers shown in FIG. 1, the container namespace can be bound only after the Sub IP is converted into the logical interface. The container address and the virtual machine address are in the same network segment. If the container is migrated to another virtual machine and is not in the same network segment as the original virtual machine address, the container address needs to be modified. In addition, because a network security group uses a port model, one security group cannot be used to represent one containerized application, and container security cannot be implemented by using the network security group. As a result, container access policy configuration is complex. Network services such as an ELB service and an EIP service do not support the Sub IP. Therefore, containers cannot support the network services such as the ELB service and the EIP service.

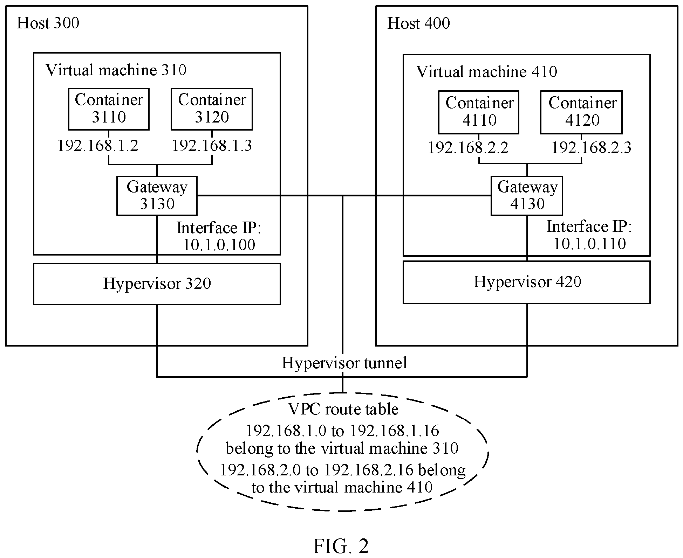

Alternatively, the container is supported by a VPC custom route table. As shown in FIG. 2, a host 300 and a host 400 are connected by using a HyperVisor tunnel and belong to a same VPC. A virtual machine 310 and a hypervisor 320 run in the host 300, and a container 3110, a container 3120, and a gateway 3130 are deployed in the virtual machine 310. An interface IP address of the virtual machine 310 is 10.1.0.100. The container 3110 and the container 3120 use a fixed IP address segment. For example, an IP address corresponding to the container 3110 is 192.168.1.2, and an IP address corresponding to the container 3120 is 192.168.1.3. For an IP address corresponding to each container, a logical interface is created in the virtual machine 310, and the created logical interface is associated with a container namespace, so that each container corresponds to one logical interface. Similarly, a container 4110 and a container 4120 deployed in a virtual machine 410 run in the host 400 also use a fixed IP address segment. For example, an IP address corresponding to the container 4110 is 192.168.2.2, and an IP address corresponding to the container 4120 is 192.168.2.3. A logical interface is created in the virtual machine 410 and associated with a container namespace. Then, an IP address segment is configured as a VPC route table. For example, an address segment 192.168.1.0 to 192.168.1.16 corresponds to the virtual machine 310, and an address segment 192.168.2.0 to 192.168.2.16 corresponds to the virtual machine 410. Then, the route table obtained through configuration is stored in a gateway (for example, the gateway 3130 and a gateway 4130) of each virtual machine. In this way, different containers may normally communicate with each other. When a container needs to access a container in another virtual machine, the container may use an entry in the VPC custom route table.

Similarly, in the scenario in which the VPC custom route table is used to support the containers shown in FIG. 2, an IP address corresponding to a container also needs to be converted into a logical interface to bind a container namespace. Different virtual machines use independent network segments, and a container address needs to be modified after a container is migrated across virtual machines. A forwarding gateway is needed in each virtual machine to process a default route, an address resolution protocol (address resolution protocol, ARP), and the like. As a result, container implementation is complex. In addition, a network security group cannot be used to implement container security, network services such as an ELB service and an EIP service cannot be supported, and cloud services such as an object storage service (object storage service, OBS) cannot be accessed.

To resolve the foregoing problem, this application provides a public cloud network configuration method and a related device. The method is applied to a cloud management platform. A network interface of a virtual machine for which a sub-interface needs to be configured is identified by using a virtual machine network interface identifier input by a tenant, and the network interface is configured to obtain the sub-interface. The sub-interface obtained through configuration is used to support an application program such as a container in the virtual machine, so that the container has a same network capability as the virtual machine, and can implement container security by using a network security group and support various network services.

The technical solutions in embodiments of this application may be further applied to various scenarios that need to depend on a network sub-interface in a public cloud, including but not limited to a network function virtualization (network function virtualization, NFV) scenario, a scenario in which a virtual machine supports a plurality of tenants, and a scenario of access through a plurality of VPCs.

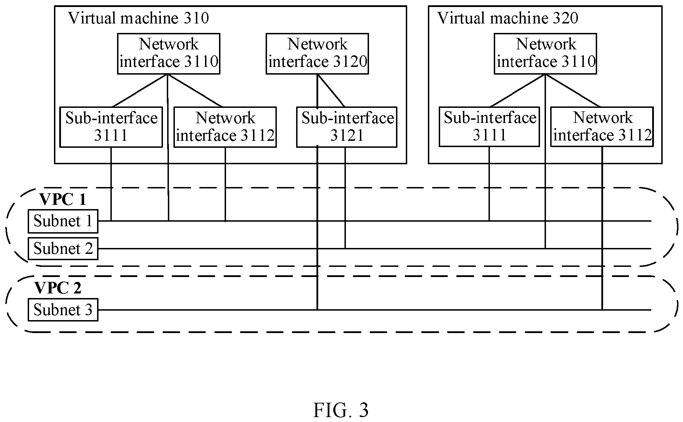

FIG. 3 is a schematic diagram of a system architecture according to an embodiment of this application. As shown in FIG. 3, a system includes a virtual machine 310 and a virtual machine 320. The virtual machine 310 has two Ethernet interfaces: a network interface 3110 and a network interface 3120. Two sub-interfaces, namely, a sub-interface 3111 and a sub-interface 3112, are configured for the network interface 3110, and a sub-interface 3121 is configured for the network interface 3120. An Ethernet interface 3210 exists in the virtual machine 320, and two sub-interfaces, namely, a sub-interface 3211 and a sub-interface 3212, are configured for the network interface 3210. It should be noted that each sub-interface inside the virtual machine is a sub-interface of an ENI, each sub-interface corresponds to a unique VlanID, each sub-interface may be bound to a subnet different from the network interface, and subnets may belong to different VPCs. For example, the network interface 3110, the sub-interface 3111, the sub-interface 3112, and the sub-interface 3211 all belong to a subnet 1, the network interface 3120 and the network interface 3210 belong to a subnet 2, and the sub-interface 3121 and the sub-interface 3212 belong to a subnet 3. The subnet 1 and the subnet 2 belong to a same VPC, that is, a VPC 1, and the subnet 3 belongs to a VPC 2.

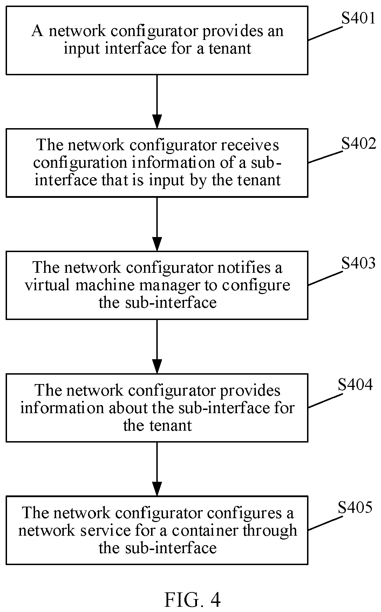

Based on the foregoing descriptions, the following describes the public cloud network configuration method and the related device provided in embodiments of this application. FIG. 4 is a schematic flowchart of a public cloud network configuration method according to an embodiment of this application. As shown in FIG. 4, the method includes but is not limited to the following steps.

S401. A network configurator provides an input interface for a tenant.

Specifically, the network configurator provides the input interface for the tenant to receive a virtual machine network interface identifier input by the tenant. Because the virtual machine network interface identifier is unique, the network configurator may select, from a public cloud data center based on the virtual machine network interface identifier input by the tenant, a virtual machine corresponding to the virtual machine network interface identifier, and determine a network interface that needs to be configured in the virtual machine. For example, the virtual machine network interface identifier may be the network interface 3110 in FIG. 3.

Optionally, the input interface provided by the network configurator may include a configuration interface, an API interface, and an input template. The network configurator may select any manner to receive the virtual machine network interface identifier input by the tenant. This is not limited in this application.

S402. The network configurator receives configuration information of a sub-interface that is input by the tenant.

Specifically, after determining the network interface that needs to be configured, the network configurator further receives the configuration information that is of the sub-interface corresponding to the network interface and that is input by the tenant, so that a cloud management platform can configure the sub-interface based on the received configuration information of the sub-interface.

The configuration information of the sub-interface may include subnet information of the sub-interface and a VlanID of the sub-interface. After the subnet information and the VlanID of the sub-interface are obtained, the sub-interface may be configured. It may be understood that, by configuring a subnet and the VlanID for the sub-interface, it can be ensured that the configured sub-interface has a same network capability as the network interface of the virtual machine, and can support various network services.

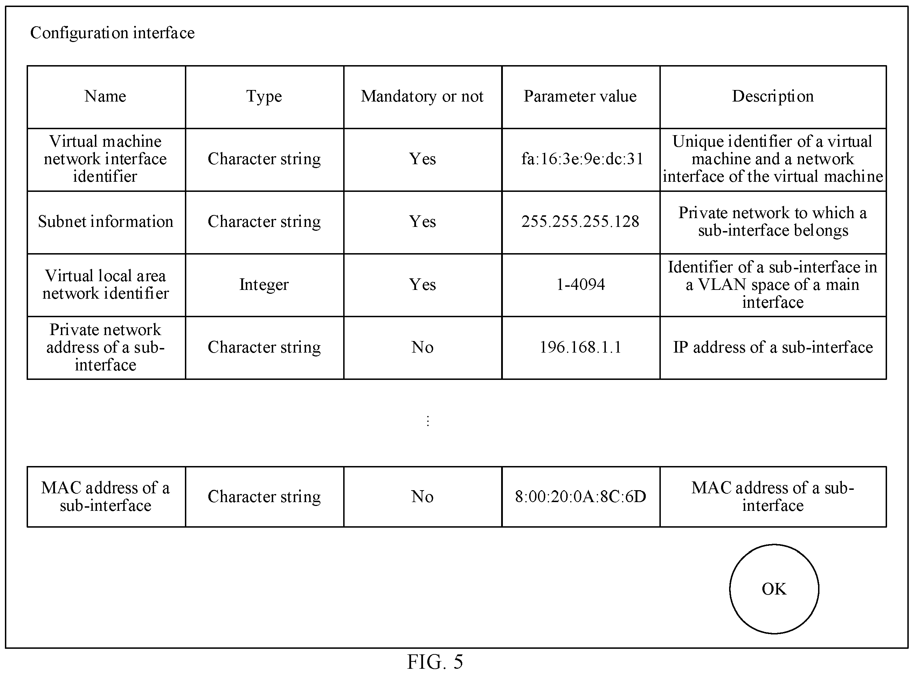

For example, an example in which the input interface provided by the network configurator is the configuration interface is used. As shown in FIG. 5, the tenant inputs the virtual machine network interface identifier and the subnet information and the VlanID of the sub-interface in the configuration interface, and clicks an OK button in the interface after completing inputting related parameter configurations. The cloud management platform may configure the sub-interface based on the configuration information input by the tenant.

S403. The network configurator notifies a virtual machine manager to configure the sub-interface.

Specifically, the network configurator determines, based on the virtual machine network interface identifier input by the tenant, a server in which the virtual machine corresponding to the virtual machine network interface identifier is located, and then notifies the virtual machine manager of the server to configure the sub-interface under the network interface of the virtual machine.

Further, the virtual machine manager creates a SubENI corresponding to a container inside the virtual machine, then creates a corresponding VLAN sub-interface, and allocates the sub-interface to a corresponding container network namespace. In this case, the sub-interface automatically obtains an IP address by using a dynamic host configuration protocol (dynamic host configuration protocol, DHCP), to facilitate subsequent mutual communication.

It should be noted that the SubENI is a network interface in a system, and an API model of the SubENI is the same as an API model of an existing ENI. For another network service that uses the network interface, a difference between the SubENI and the ENI is not perceived. The API model of the SubENI is the same as that of the ENI. Therefore, when the SubENI is created, a SubENI API interface is obtained by directly extending an ENI API, but three attributes are added: an interface type, a main interface ID, and a VLAN corresponding to the sub-interface. The interface type is represented by a character string, and includes an ENI main interface and a SubENI sub-interface. The main interface ID is also represented by a character string, is valid when the interface type is the SubENI sub-interface, and represents an ID of a main interface. The VLAN corresponding to the sub-interface is represented by an integer, and content of the VLAN is a VlanID of the sub-interface. A value may be an available VlanID automatically allocated by the virtual machine manager in a VLAN space of the main interface when the SubENI is created, or may be specified by the tenant. However, it should be ensured that specified values do not conflict in the VLAN space of the main interface, and the value ranges from 1 to 4094.

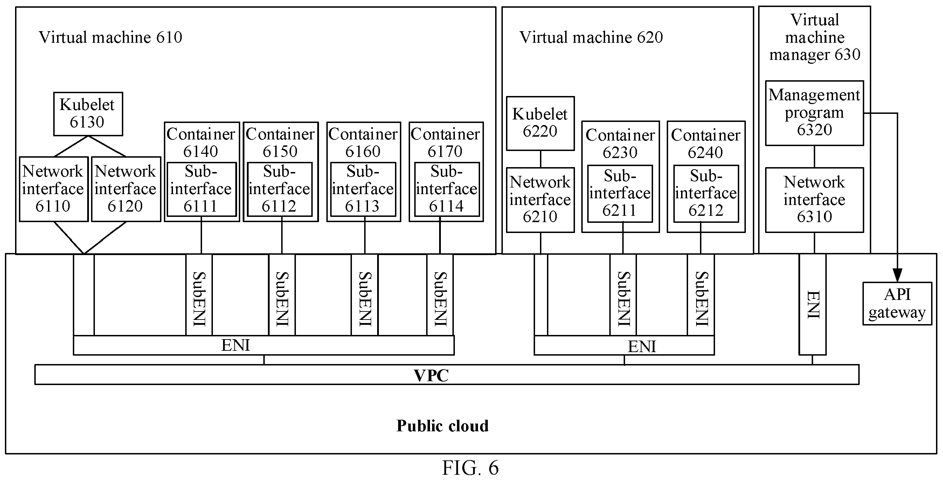

For example, FIG. 6 is a schematic diagram of a scenario of configuring a sub-interface according to an embodiment of this application. As shown in FIG. 6, a virtual machine 610, a virtual machine 620, and a virtual machine manager 630 belong to a same VPC on a public cloud, and communicate with each other by using an ENI. A network interface 6110, a network interface 6120, a kubelet (kubelet) 6130, a container 6140, a container 6150, a container 6160, and a container 6170 are deployed in the virtual machine 610. A network interface 6210, a kubelet 6220, a container 6230, and a container 6240 are deployed in the virtual machine 620. The virtual machine manager 630 includes a network interface 6310 and a management program 6320. The management program 6320 invokes an API of the public cloud by using an API gateway provided by the public cloud, and creates SubENIs corresponding to the containers in the virtual machine 610. When the SubENIs are created, VLANs may be specified or automatically allocated by the public cloud. Then, VLAN sub-interfaces, that is, a sub-interface 6111, a sub-interface 6112, a sub-interface 6113, and a sub-interface 6114, corresponding to the SubENIs are created by using the kubelet 6130. The sub-interfaces are allocated to corresponding container network namespaces. For example, the sub-interface 6111 is allocated to the container 6140, the sub-interface 6112 is allocated to the container 6150, the sub-interface 6113 is allocated to the container 6160, and the sub-interface 6114 is allocated to the container 6170. In addition, SubENIs corresponding to the containers are created in the virtual machine 620, then a sub-interface 6211 and a sub-interface 6212 corresponding to the SubENIs are created by using the kubelet 6220, the sub-interface 6211 is allocated to the container 6230, and the sub-interface 6212 is allocated to the container 6240. After the sub-interfaces are allocated to the corresponding container network namespaces, each sub-interface automatically obtains an IP address by using a DHCP. In this case, the containers may communicate with each other to implement service interworking. In addition, the containers can support various network services and have a same network capability as the virtual machine.

In a possible implementation, the sub-interface is bound to a container in the virtual machine, and the container performs network packet processing through the sub-interface.

Specifically, because the sub-interface has the subnet information and the VlanID, after the sub-interface is bound to the container in the virtual machine, the container has a same network capability as the virtual machine, and may perform the network packet processing through the sub-interface.

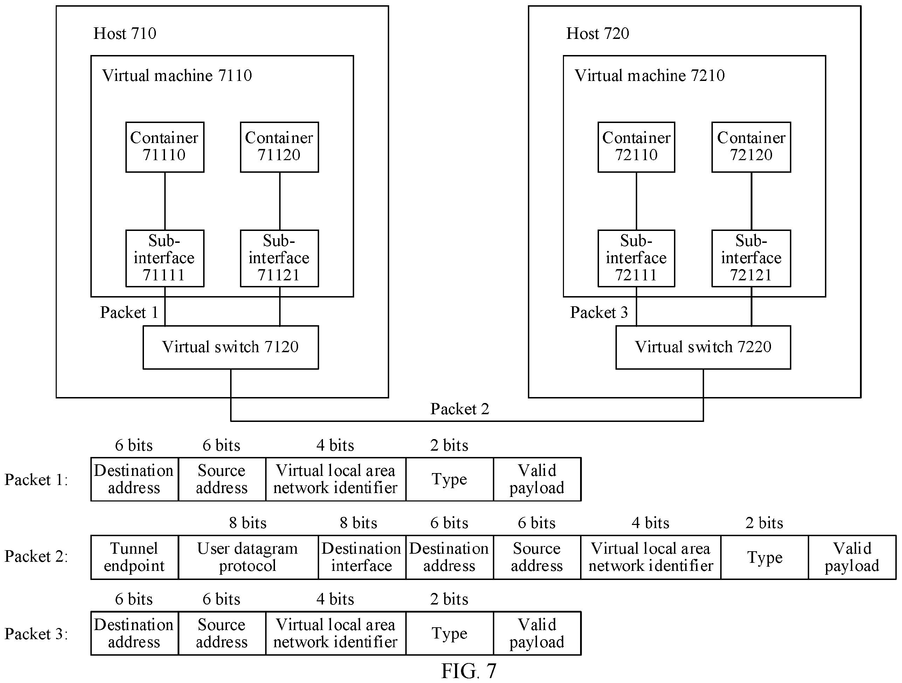

For example, as shown in FIG. 7, a virtual machine 7110 and a virtual switch 7120 are deployed in a host 710, a container 71110 and a container 71120 are deployed in the virtual machine 7110, the container 71110 is bound to a sub-interface 71111, and the container 71120 is bound to a sub-interface 71121. A structure of a host 720 is similar to that of the host 710. A virtual machine 7210 and a virtual switch 7220 are also deployed in the host 720. A container 72110 and a container 72120 are deployed in the virtual machine 7210, the container 72110 is bound to a sub-interface 72111, and the container 72120 is bound to a sub-interface 72121. If the container 71110 needs to communicate with the container 72110, a packet sent by the container 71110 through the sub-interface 71111 is a packet, that is, a packet 1, carrying a VlanID. The packet 1 includes a 6-bit destination address, a 6-bit source address, a 4-bit virtual local area network identifier (VlanID), a 2-bit packet type, and a valid payload. After receiving the packet 1, the virtual switch 7120 finds, based on the VlanID of the sub-interface 71111 through which the packet is sent, a route table (that is, a VPC route table) corresponding to the sub-interface 71111, and then performs VxLAN encapsulation on the packet 1 based on a route in the route table. The virtual switch 7120 deletes a virtual local area network identifier field of the packet 1, and performs VxLAN encapsulation by using destination interface information (that is, the sub-interface 72111) to obtain a packet 2. In comparison with the packet 1, a tunnel endpoint field, an 8-bit user datagram protocol (user datagram protocol, UDP) field, and a destination interface field (for example, a subnet to which a destination interface belongs or a VPC to which the destination interface belongs) are added to a header of the packet 2, and the virtual local area network identifier field is deleted. The virtual switch 7120 sends the packet 2 to the virtual switch 7220. After receiving the packet 2, the virtual switch 7220 finds, based on the destination interface field of the packet 2, a corresponding route table (that is, a VPC route table), deletes the tunnel endpoint field, the UDP field, and the destination interface field from the packet 2, then searches the table and forwards the packet 2 based on a destination address in the packet, determines that the destination address is the sub-interface 72111 in the virtual machine 7210, and adds a virtual local area network identifier field. It should be understood that the virtual local area network identifier added herein is different from the virtual local area network identifier in the packet 1. A packet 3 is obtained. Finally, the virtual switch 7220 sends the packet 3 to the virtual machine 7210. After receiving the packet 3, the virtual machine 7210 deletes the virtual local area network identifier field from the packet 3, and sends the packet 3 to the container 72110 through the sub-interface 72111. Finally, communication between the container 71110 and the container 72110 is successfully implemented.

In a possible implementation, the configuration information of the sub-interface further includes a security group rule, and the security group rule is used to perform security group processing on a packet of the container bound to the sub-interface.

Specifically, because the configured sub-interface has a same network capability as a main interface of the virtual machine, one security group may be used to represent one containerized application, and the security group processing is performed on the packet of the container bound to the sub-interface, to ensure access security of the containerized application.

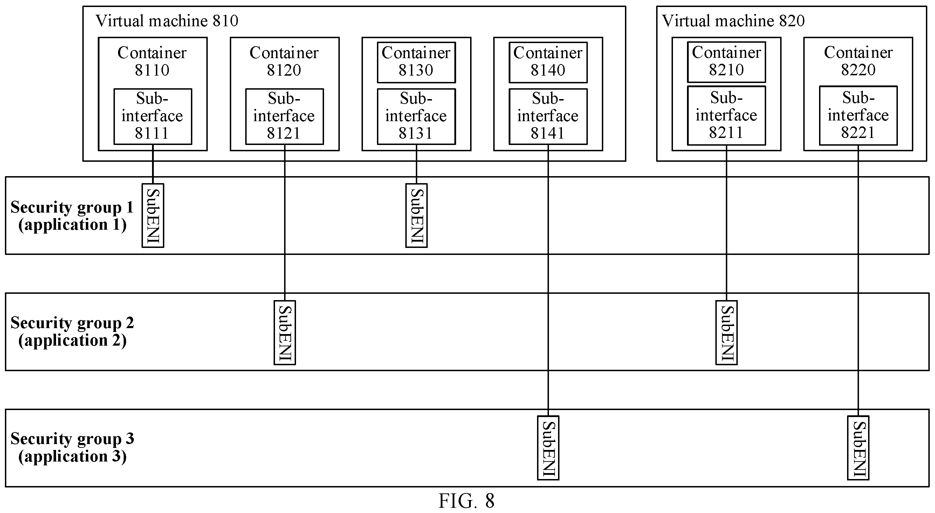

Further, one application uses one security group, the security group is secure and reliable, and access policies may be configured between different applications by using security policies between security groups. For example, as shown in FIG. 8, a container 8110, a container 8120, a container 8130, and a container 8140 are deployed in a virtual machine 810. The container 8110 is bound to a sub-interface 8111, the container 8120 is bound to a sub-interface 8121, the container 8130 is bound to a sub-interface 8131, and the container 8140 is bound to a sub-interface 8141. A container 8210 and a container 8220 are deployed in a virtual machine 820. The container 8210 is bound to a sub-interface 8211, and the container 8220 is bound to a sub-interface 8221. The sub-interface 8111 and the sub-interface 8131 are configured into a security group 1, the sub-interface 8121 and the sub-interface 8211 are configured into a security group 2, and the sub-interface 8141 and the sub-interface 8221 are configured into a security group 3. Sub-interfaces in a same security group may access each other without restriction. For example, the sub-interface 8111 may directly access the sub-interface 8131, and the sub-interface 8141 may directly access the sub-interface 8221. A default security group rule may be used between different security groups or a security group rule may be configured as required between different security groups, to meet actual requirements and ensure access security of containerized applications. For example, if the security group rule is configured as that the security group 1 is allowed to access the security group 2 and the security group 2 is not allowed to access the security group 1, the sub-interface 8111 may access the sub-interface 8121 and the sub-interface 8211, and the sub-interface 8121 and the sub-interface 8211 cannot access the sub-interface 8111 and the sub-interface 8131.

In addition, configuring a sub-interface into a security group can ensure that when a container is migrated, the security group to which the sub-interface belongs does not change, access between containers still complies with a security group rule, a container address does not need to be modified, and no additional related access policy configuration is required. For example, if the container 8110 is migrated to the virtual machine 820, the sub-interface 8111 still belongs to the security group 1.

S404. The network configurator provides information about the sub-interface for the tenant.

Specifically, after completing the sub-interface configuration, the virtual machine manager obtains related information about the sub-interface, for example, a sub-interface identifier of the sub-interface, a private network address and the subnet information of the sub-interface, a MAC address of the sub-interface, and the VlanID of the sub-interface, and then provides the information about the sub-interface for the tenant so that the tenant can configure various network services for the sub-interface.

S405. The network configurator configures a network service for a container through the sub-interface.

Specifically, after the sub-interface is bound to a container, a network capability of the container is the same as a network capability of the virtual machine. The container can support all network services that can be supported by the virtual machine, for example, mounting ELB, binding an EIP, and accessing an OBS. This can expand application scenarios of the container.

The foregoing describes in detail the method in embodiments of this application. For ease of better implementing the foregoing solutions in embodiments of this application, correspondingly, a related device configured to cooperate in implementing the foregoing solutions is further provided below.

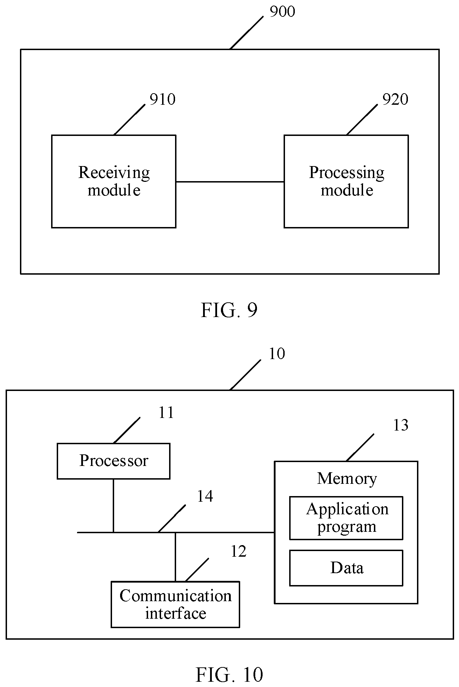

FIG. 9 is a schematic diagram of a structure of a network device according to an embodiment of this application. The network device may be the network configurator in the method embodiment in FIG. 4, and may perform the method and steps performed by the network configurator in the public cloud network configuration method embodiment in FIG. 4. As shown in FIG. 9, the network device 900 includes a receiving module 910 and a processing module 920.

The receiving module 910 is configured to receive a virtual machine network interface identifier input by a tenant, where the virtual machine network interface identifier identifies a network interface of a virtual machine for which a sub-interface needs to be configured.

The processing module 920 is configured to determine the network interface of the virtual machine corresponding to the virtual machine network interface identifier, configure the sub-interface for the network interface, and provide information about the sub-interface for the tenant.

Specifically, the receiving module 910 is configured to perform the foregoing steps S401 and S402, and optionally perform an optional method in the foregoing steps. The processing module 920 is configured to perform the foregoing steps S403 to S405, and optionally perform an optional method in the foregoing steps. The two modules may transmit data to each other through a communication path. It should be understood that the modules included in the network device 900 may be software modules, or may be hardware modules, or some modules are software modules and some modules are hardware modules.

In an embodiment, the receiving module 910 is further configured to receive configuration information of the sub-interface that is input by the tenant, and the processing module 920 is further configured to configure the sub-interface based on the configuration information.

In an embodiment, the sub-interface is bound to a container in the virtual machine, and the container performs network packet processing through the sub-interface.

In an embodiment, the configuration information of the sub-interface includes a security group rule, and the security group rule is used to perform security group processing on a packet of the container bound to the sub-interface.

In an embodiment, the configuration information of the sub-interface includes subnet information of the sub-interface and a virtual local area network identifier VlanID of the sub-interface.

In an embodiment, the processing module 920 is specifically configured to: determine a server in which the virtual machine corresponding to the virtual machine network interface identifier is located; and notify a virtual machine manager of the server to configure the sub-interface under the network interface of the virtual machine.

In an embodiment, the information about the sub-interface includes one or any combination of a sub-interface identifier UUID of the sub-interface, a private network address and the subnet information of the sub-interface, a media access control MAC address of the sub-interface, and the virtual local area network identifier VlanID of the sub-interface.

In an embodiment, the input interface includes a configuration interface, an application programming interface API, and an input template.

It may be understood that the receiving module 910 in this embodiment of this application may be implemented by a transceiver or a transceiver-related circuit component, and the processing module 920 may be implemented by a processor or a processor-related circuit component.

It should be noted that the structure of the foregoing network device is merely used as an example, and should not constitute a specific limitation. Modules in the network device may be added, deleted, or combined as required. In addition, operations and/or functions of modules in the network device are intended to implement corresponding procedures of the method described in FIG. 4. For brevity, details are not described herein again.

FIG. 10 is a schematic diagram of a structure of a computing device according to an embodiment of this application. As shown in FIG. 10, the computing device 10 includes a processor 11, a communication interface 12, and a memory 13. The processor 11, the communication interface 12, and the memory 13 are connected by using an internal bus 14. It should be understood that the computing device 10 may be a computing device in a public cloud.

The processor 11 may include one or more general-purpose processors, for example, a central processing unit (central processing unit, CPU) or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The bus 14 may be a peripheral component interconnect (peripheral component interconnect, PCI) bus, an extended industry standard architecture (extended industry standard architecture, EISA) bus, and or the like. The bus 14 may be classified into an address bus, a data bus, a control bus, and the like. For ease of representation, only one thick line is used to represent the bus in FIG. 10, but this does not mean that there is only one bus or only one type of bus.

The memory 13 may include a volatile memory (volatile memory) such as a random access memory (random access memory, RAM), or the memory 13 may include a non-volatile memory (non-volatile memory) such as a read-only memory (read-only memory, ROM), a flash memory (flash memory), a hard disk drive (hard disk drive, HDD), or a solid-state drive (solid-state drive, SSD), or the memory 13 may include a combination of the foregoing types.

It should be noted that the memory 13 in the computing device 10 stores code corresponding to the modules of the network device 900, and the processor 11 executes the code to implement the functions of the modules of the network device 900, that is, performs the method in S401 to S405.

This application further provides a computer-readable storage medium. The computer-readable storage medium stores a computer program. When the computer program is executed by a processor, some or all of the steps recorded in any one of the foregoing method embodiments may be implemented.

An embodiment of the present invention further provides a computer program, and the computer program includes instructions. When the computer program is executed by a computer, the computer is enabled to perform some or all steps of any public cloud network configuration method.

In the foregoing embodiments, descriptions of each embodiment have different focuses. For a part that is not described in detail in an embodiment, refer to related descriptions in other embodiments.

It should be noted that, for brief description, the foregoing method embodiments are represented as a series of actions. However, a person skilled in the art should understand that this application is not limited to the described sequence of the actions, because according to this application, some steps may be performed in another sequence or simultaneously. It should be further understood by a person skilled in the art that embodiments described in this specification are all embodiments, and the involved actions and modules are not necessarily required by this application.

In the several embodiments provided in this application, it should be understood that the disclosed apparatus may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

## Claims

1. A public cloud network configuration method, wherein the method is applied to a cloud management platform, and comprises:
providing an input interface for a tenant, wherein the input interface is configured to receive a virtual machine network interface identifier input by the tenant, and the virtual machine network interface identifier identifies a network interface of a virtual machine for which a sub-interface needs to be configured; and
determining the network interface of the virtual machine corresponding to the virtual machine network interface identifier, configuring the sub-interface for the network interface, and providing information about the sub-interface for the tenant.

2. The method according to claim 1, wherein the input interface is further configured to receive configuration information of the sub-interface that is input by the tenant, and the method further comprises:
configuring, by the cloud management platform, the sub-interface based on the configuration information.

3. The method according to claim 1 or 2, wherein the sub-interface is bound to a container in the virtual machine, and the container performs network packet processing through the sub-interface.

4. The method according to claim 3, wherein the configuration information of the sub-interface comprises a security group rule, and the security group rule is used to perform security group processing on a packet of the container bound to the sub-interface.

5. The method according to any one of claims 1 to 4, wherein the configuration information of the sub-interface comprises subnet information of the sub-interface and a virtual local area network identifier VlanID of the sub-interface.

6. The method according to claim 4 or 5, wherein the determining the network interface of the virtual machine corresponding to the virtual machine network interface identifier, configuring the sub-interface for the network interface, and providing information about the sub-interface to the tenant comprises:
determining a server in which the virtual machine corresponding to the virtual machine network interface identifier is located; and
notifying a virtual machine manager of the server to configure the sub-interface under the network interface of the virtual machine.

7. The method according to any one of claims 1 to 6, wherein the information about the sub-interface comprises one or any combination of a sub-interface identifier UUID of the sub-interface, a private network address and the subnet information of the sub-interface, a media access control MAC address of the sub-interface, and the virtual local area network identifier VlanID of the sub-interface.

8. The method according to any one of claims 1 to 7, wherein the input interface comprises a configuration interface, an application programming interface API, and an input template.

9. A network device, comprising:
a receiving module, configured to receive a virtual machine network interface identifier input by a tenant, wherein the virtual machine network interface identifier identifies a network interface of a virtual machine for which a sub-interface needs to be configured; and
a processing module, configured to determine the network interface of the virtual machine corresponding to the virtual machine network interface identifier, configure the sub-interface for the network interface, and provide information about the sub-interface for the tenant.

10. The network device according to claim 9, wherein
the receiving module is further configured to receive configuration information of the sub-interface that is input by the tenant; and
the processing module is further configured to configure the sub-interface based on the configuration information.

11. The network device according to claim 9 or 10, wherein the sub-interface is bound to a container in the virtual machine, and the container performs network packet processing through the sub-interface.

12. The network device according to claim 11, wherein the configuration information of the sub-interface comprises a security group rule, and the security group rule is used to perform security group processing on a packet of the container bound to the sub-interface.

13. The network device according to any one of claims 9 to 12, wherein the configuration information of the sub-interface comprises subnet information of the sub-interface and a virtual local area network identifier VlanID of the sub-interface.

14. The network device according to claim 12 or 13, wherein the processing module is specifically configured to:
determine a server in which the virtual machine corresponding to the virtual machine network interface identifier is located; and
notify a virtual machine manager of the server to configure the sub-interface under the network interface of the virtual machine.

15. The network device according to any one of claims 9 to 14, wherein the information about the sub-interface comprises one or any combination of a sub-interface identifier UUID of the sub-interface, a private network address and the subnet information of the sub-interface, a media access control MAC address of the sub-interface, and the virtual local area network identifier VlanID of the sub-interface.

16. The network device according to any one of claims 9 to 15, wherein an input interface comprises a configuration interface, an application programming interface API, and an input template.

17. A computing device, wherein the computing device comprises a memory and a processor, and the processor executes computer instructions stored in the memory, to enable the computing device to perform the method according to any one of claims 1 to 8.

18. A computer-readable storage medium, wherein the computer-readable storage medium stores a computer program, and when the computer program is executed by a processor, the processor performs the method according to any one of claims 1 to 8.
